(19) Europäisches Patentamt
European Patent Office
Office européen des brevets

(11) Veröffentlichungsnummer: **0 011 155**
**A1**

# (12) EUROPÄISCHE PATENTANMELDUNG

(21) Anmeldenummer: **79104072.8**

(22) Anmeldetag: **20.10.79**

(51) Int. Cl.³: **F 16 L 37/28**
B 60 T 17/22, B 67 D 5/06

(30) Priorität: **08.11.78 DE 2848434**

(43) Veröffentlichungstag der Anmeldung:
**28.05.80 Patentblatt 80/11**

(84) Benannte Vertragsstaaten:
**BE FR GB IT NL**

(71) Anmelder: **Leybold-Heraeus GmbH**
**Bonner Strasse 504 Postfach 51 07 60**
**D-5000 Köln 51(DE)**

(72) Erfinder: **Pohan, Kurt, Ing. grad.**
**Ziegelstrasse 17**
**D-6463 Freigericht 1(DE)**

(74) Vertreter: **Leineweber, Jürgen, Dipl.-Phys.**
**Bonner Strasse 504 Postfach 51 07 60**
**D-5000 Köln 51(DE)**

## (54) Fülladapter.

(57) Bei diesem Fülladapter für Flüssigkeiten ist mindestens eine Flüssigkeitszuführungsleitung (35) und eine Absaugleitung (36) für überfüllte Flüssigkeit angeschlossen.

Um den Spann- und Füllvorgang bzw. den Absaug- und Lösungsvorgang in optimal kurzer Zeit durchführen zu können, ist im Adaptergehäuse (1) eine axial verschiebbare Stange (2) mit einem axialen Kanal (3) vorgesehen, welce mit ihrem einen Ende die in den jeweiligen Einfüllstutzen (10) bis zum gewünschten Füllstand hineinragende Einfüllmündung (9) bildet. Durch eine Verschiebung der Stange (2) sind gleichzeitig eine im Bereich der Einfüllmündung (9) befindliche Spannvorrichtung (24 bis 29) und Mittel zur Steuerung des Füll- bzw. Absaugvorganges betätigbar.

EP 0 011 155 A1

./...

Croydon Printing Company Ltd.

18
35
36
39
32
33
34
4
38
37
1
19
6
7
1
2
5
14
17
3
16
30
22
20
21
24
28
27
24
26
26
25
40
31
11
12
29
10
8
9

FIG. 1

0011155

78.035

LEYBOLD-HERAEUS GMBH
Köln-Bayental

## Fülladapter

Die Erfindung bezieht sich auf einer Fülladapter für Flüssigkeiten, an den mindestens eine Flüssigkeitszuführungsleitung und eine Absaugleitung für überfüllte Flüssigkeit angeschlossen ist.

Fülladapter dieser Art dienen der Befüllung von Flüssigkeitssystemen mit ihren Betriebsflüssigkeiten, wie z.B. der Befüllung von Kältemittelkreisläufen mit Kältemittel oder - bei der Automobilherstellung - dem Befüllen von Bremsleitungssystemen mit Bremsflüssigkeit oder von Kühlersystemen mit Kühlflüssigkeit. Insbesondere in der Automobilindustrie müssen derartige Befüllungsvorgänge unter Einhaltung eines bestimmten Flüssigkeitsstandes äußerst schnell ablaufen.

Mit bekannten Fülladaptern geschieht die Befüllung des jeweiligen Systems in der Weise, daß zunächst der Adapter auf den jeweiligen Einfüllstutzen mit Hilfe einer Spannvorrichtung befestigt wird. Danach wird ein Ventil geöffnet, so daß die gewünschte Flüssigkeit aus der Füllstation in das Leitungssystem einfließt. Häufig erfolgt dabei die Befüllung in einem Kreislauf, das heißt, daß die eingefüllte Flüssigkeit zunächst an einer anderen Stelle des Leitungssystems so lange wieder abgezogen und der Füllstation zugeführt wird, bis das gesamte System gereinigt und gasfrei ist. Im Falle der Füllung von Bremsleitungssystemen mit Bremsflüssigkeit kann zusätzlich in der Füllstation noch eine Vakuumentgasung der Flüssigkeit stattfinden.

Ist der Füllvorgang beendet, wird das Einfüllventil geschlossen und ein Absaugventil geöffnet, das einen Teil der Flüssigkeit im Bereich des Einfüllstutzens wieder absaugt, damit ein genau definierter Füllstand erreicht wird. Als letzte Maßnahme folgt dann das Lösen der Spannvorrichtung von dem jeweiligen Einfüllstutzen.

Der vorliegenden Erfindung liegt die Aufgabe zugrunde, einen raumsparenden, leichten und handlichen Fülladapter der eingangs genannten Art zu schaffen, mit dem der Füllvorgang einfacher und schneller als bisher vorgenommen werden kann.

Erfindungsgemäß wird diese Aufgabe dadurch gelöst, daß der Fülladapter eine gegenüber dem Adaptergehäuse axial verschiebbare Stange mit einem axialen Kanal aufweist, welche mit ihrem einen Ende die in den jeweiligen Einfüllstutzen bis zum gewünschten Füllstand hineinragende Einfüllmündung bildet, und daß durch eine Verschiebung der Stange gleichzeitig eine im Bereich der Einfüllmündung befindliche Spannvorrichtung für die Halterung des Adapters auf den jeweiligen Einfüllstutzen und Mittel zur Steuerung des Füll- bzw. Absaugvorganges betätigbar sind. Mit einem in dieser Weise ausgebildeten Fülladapter können der Spann- und Füllvorgang bzw. der Absaug- und Lösungsvorgang gleichzeitig ausgeführt werden, so daß kein Zeitverlust zwischen der Befestigung oder Lösung des Fülladapters und der Steuerung des Füllvorganges eintritt. Der gesamte Füllvorgang kann also in optimal kurzer Zeit durchgeführt werden. Dadurch,daß unter anderem die Betätigungsstange und der darin befindliche Kanal von nur einem Bauteil gebildet werden, ist der Adapter klein, leicht und handlich, was insbesondere bei der Automobilherstellung wegen der beengten Platzverhältnisse im Motorraum von besonderer Bedeutung ist.

Im übrigen ist der Adapter nutzbringend in sterilen Räumen oder Kerntechnischen Anlagen, wo eine manuelle Betätigung nicht möglich ist und die Bewegungen für Spannen, Füllen und Saugen auf ein Minimum reduziert werden müssen. Dieser Adapter braucht nur senkrecht auf- und abgenommen zu werden.

Besonders vorteilhaft ist es, wenn die Stange an einem Kolben befestigt ist, der Bestandteil einer pneumatisch oder hydraulisch betätigbaren Zylinder- Kolben-Einrichtung ist. Die automatische Betätigung des Fülladapters ist dann besonders einfach.

Bei einer weiteren vorteilhaften Ausführungsform sind die Mittel zur Steuerung des Füll bzw. Absaugvorganges an dem der Einfüllmündung abgewandten Ende der Stange angeordnet. Dadurch ist es möglich, die Einfüllmündung, die Zylinder-Kolben-Einrichtung zur Betätigung der Stange und die Mittel zur Steuerung des Füll- bzw. Absaugvorganges axial hintereinander anzuordnen, und zwar derart, daß die Steuermittel für den Füll-bzw. Absaugvorgang vorzugsweise dort liegen, wo die Flüssigkeitszuleitung, die Absaugleitung und auch die Druckmittelleitung für die Betätigung der Zylinder-Kolben-Einrichtung an das Adaptergehäuse angeschlossen sind.

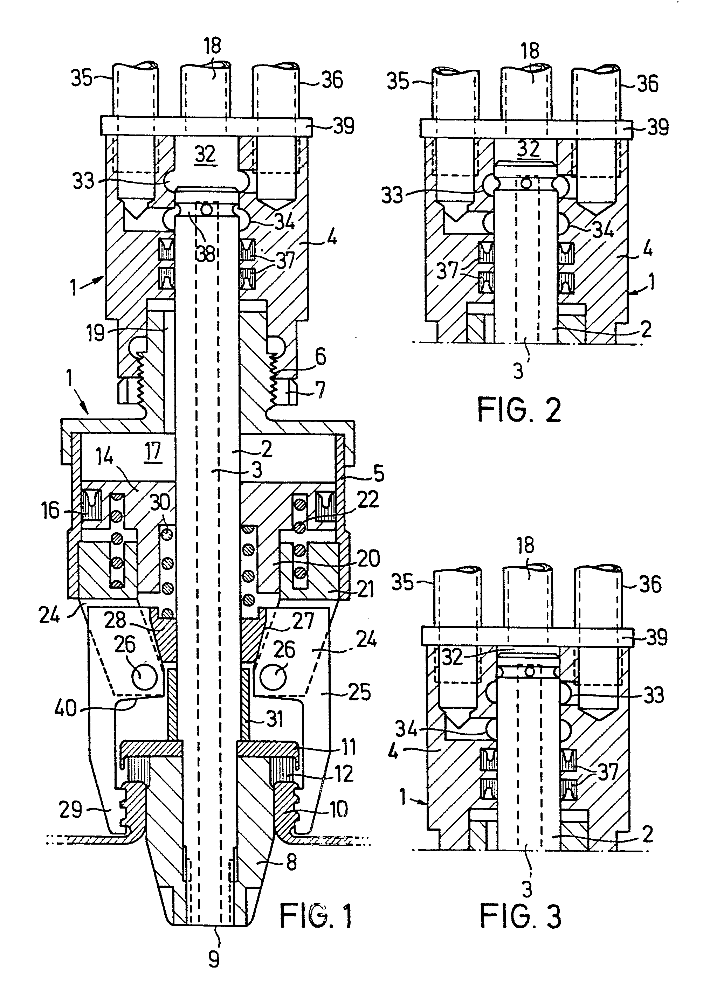

Weitere Vorteile und Einzelheiten der Erfindung sollen anhand der Figuren 1 bid 3 erläutert werden. Die Figuren zeigen einen Längsschnitt bzw. Längsteilschnitte durch ein Ausführungsbeispiel nach der Erfindung.

Das dargestellte Ausführungsbeispiel umfasst im wesentlichen das Adaptergehäuse 1 und die darin axial verschiebbare Stange 2 mit dem Kanal 3, der von einer vorzugsweise zentrischen Bohrung gebildet wird.

Das Adaptergehäuse 1 besteht aus zwei Teilen 4 und 5, die mittels des Gewindes 6 und des Feststellringes 7 lösbar miteinander verbunden sind. Das Gewinde 6 und der Feststellring 7 sind so gestaltet, daß die Gehäuseteile 4 und 5 mit zueinander unterschiedlichen Abständen miteinander verbindbar sind.

Die den Flüssigkeitskanal 3 enthaltende Stange 2 durchsetzt beide Gehäuseteile 4 und 5 und ist an ihrem unteren Ende mit einem Mundstück 8 versehen. Dieses Mundstück 8, dessen unteres Ende die Einfüllmündung 9 bildet, dient der Einführung der Stange 2 mit dem Kanal 3 in den jeweiligen Einfüllstutzen 10. Während des Füllvorganges ruht der ebenfalls mit der Stange 2 befestigte Flansch 11 mit seinem Dichtring 12 auf der Oberkante des Einfüllstutzens 10, so daß die notwendige Abdichtung gewährleistet ist.

Um die Stange 2 im Gehäuse 1 axial verschieben zu können, ist die Stange 2 im Bereich des Gehäuseteiles 5 mit einem Kolben 14 versehen. Dieser Kolben 14 ist im oberen Abschnitt des Gehäuseteiles 5 verschiebbar gelagert und mittels des Dichtringes 16 derart abgedichtet, daß eine Bewegung des Kolbens 14 nach unten erfolgt, wenn der Raum 17 oberhalb des Kolbens 14 mit einem Druckmittel beaufschlagt wird. Die Zuführung des Druckmittels - vorzugsweise Preßluft - erfolgt über die Zuführungsleitung 18, die über nicht sichtbare Kanäle mit der in dem Raum 17 mündenden Längsnut 19 verbunden ist.

Der Kolben 14 ist mit einem zylindrischen Abschnitt 20 in einem Stützring 21 geführt, der mit dem Gehäuseteil 5 fest verbunden ist. Zwischen dem Kolben 14 und dem Stützring 21 ist eine Druckfeder 22 angeordnet, die bewirkt, daß der Kolben 14 ohne Druckbeaufschlagung im Raum 17 (und 32) seine obere Endstellung einnimmt.

Am Gehäuseteil 5 sind mehrere Streben 24 (nur zwei sind sichtbar) befestigt, an denen jeweils eine Klaue 25 schwenkbar gehaltert sind. Die Klauen 25 weisen oberhalb ihrer Schwenkachse 26 bezüglich der Kolbenstange 2 schräg verlaufende Flächen 27 auf. Diesen Schrägflächen ist ein Konus 28 an der Kolbenstange 2 zugeordnet, und zwar derart, daß sich die unteren Enden 29 der Klauen 25 aufeinanderzubewegen, wenn sich die Kolbenstange 2 mit dem Konus 28 nach unten bewegen. Die Form der unteren Enden 29 der Klauen 25 sind der äußeren Form des Einfüllstutzens 10 angepaßt. Bewegt sich die Kolbenstange 2 nach oben, dann spreizen sich die Klauen 25, da der Flansch 11 auf die schrägen Flächen 40 der Klauen 25 trifft und diese nach außen über die Schwenkachsen 26 aufklappen. Zwischen dem Konus 28 und dem Kolben 14 ist noch eine weitere Druckfeder 3o angeordnet, die den Konus 28 an die konischen Gegenflächen 27 der Klauen 24 drücken und damit ein Aufspringen der Klauen beim Spannen sicher verhindern. Oberhalb des Flansches 11 befindet sich auf der Stange 2 eine Hülse 31. Die nimmt beim Hochgehen der Stange 2 den Konus 28 mit und gibt damit den Klauen 25 die Möglichkeit zu öffnen.

Im Gehäuseteil 4 sind die Mittel zur Steuerung des Füll- bzw. Absaugvorganges untergebracht. Diese Steuerung erfolgt ebenfalls durch eine axiale Verschiebung der Kolbenstange 2. Dazu ist im Gehäuseteil 4 ein Zylinderraum 32

0011155

vorgesehen, in den das obere Ende der Kolbenstange 2 hineinragt. In die Zylinderwand sind zwei axial hintereinander liegende Ringnuten 33 und 34 vorgesehen. Die Ringnut 34 steht mit der Zuführungsleitung 35 in Verbindung, die beim dargestellten Ausführungsbeispiel der Zuführung der jeweiligen Betriebsflüssigkeit dient. Die Ringnut 33 steht mit der Zuführungsleitung 36 in Verbindung, die an eine nicht dargestellte Absaug-Einrichtung angeschlossen ist. Der Abdichtung des Zylinderraumes 32 gegenüber der Kolbenstange 2 dienen die Dichtringe 37

Den Ringnuten 33 und 34 in der Wand des Zylinders 32 ist eine Ringnut 38 in der Stange 2 zugeordnet. In diese Ringnut 38 mündet der axiale Kanal 3 in der Stange 2. Die Größe der Nuten 33,34 und 38, der Abstand der Nuten 33 und 34 voneinander und der Abstand der oberen Nut 33 von dem oberen Ende des Zylinderraumes 32 - gebildet von der Abdeckplatte 39 - sind so gewählt und bemessen, daß durch Verschiebung der Stange 2 der darin befindliche Kanal 3 einmal über die Ringnuten 38 und 34 mit der Flüssigkeitszuführungsleitung 35 (Figur 1) und - bei einer anderen Stellung der Stange 2 - über die Ringnuten 38 und 33 mit der Absaugleitung 36 verbunden werden kann (Figur 2). Wenn sich die Kolbenstange 2 in ihrer obersten Stellung befindet (Figur 3), dann sind die Zuleitungen 35 und 36 zum Adapter hin verschlossen. Das ist die Ruhestellung des Adapters, in der auch die Klauen 25 aueinander gespreizt sind.

Mit dem erfindungsgemäßen Adapter läuft ein Füllvorgang folgendermaßen ab:

In seiner Ruhestellung wird der Adapter mit der Dichtung 12 auf den Einfüllstutzen 10 gesetzt. Danach wird über die Zuleitung 18 ein Druckmittel in den Zylinderraum 17 eingeführt, so daß sich die Kolbenstange 2 nach unten bewegt. Während dieser Abwärtsbewegung bewegen sich die Klauen 25 aufeinander zu und umgreifen den Einfüllstutzen 10 zum Zwecke der Halterung und Abdichtung. Gleichzeitig bewegt sich die Ringnut 38 in der Kolbenstange 2 in die in Figur 1 dargestellte Stellung. In dieser Stellung ist der Kanal 3 mit der Zuführungsleitung 35 verbunden, so daß die gewünschte Betriebsflüssigkeit einströmt. Während der Abwärtsbewegung hat für eine bestimmte Zeit eine Verbindung zwischen der Absaugleitung 36 und dem Kanal 3 in der Kolbenstange 2 bestanden. Falls erforderlich, kann diese Stellung ausreichend lange beibehalten werden, so daß in den zu befüllenden Räumen ein Unterdruck entsteht. In der Regel ist man aber bestrebt, daß möglichst schnell nach dem Aufsetzen des Adapters auf den Einfüllstutzen 10 das Einströmen der Flüssigkeit beginnt. Beim erfindungsgemäßen Adapter ist diese Zeit extrem kurz, da gleichzeitig mit der Halterung des Adapters auf dem Einfüllstutzen 10 auch die Verbindung zwischen der Zuführungsleitung 35 und dem Kanal 3 in der Kolbenstange 2 hergestellt wird.

Ist der Füllvorgang beendet, wird eine Bewegung der Kolbenstange 2 nach oben dadurch eingeleitet, daß der Zylinderraum 17 druckentlastet wird. In Abhängigkeit von der Druckentlastungsgeschwindigkeit und der Stärke der Feder 22 bewegt sich die Kolbenstange nach oben. Während dieser Aufwärtsbewegung wird die Verbindung des Kanals 3 mit der Zuführungsleitung 35 unterbrochen und für eine von der Geschwindigkeit der Kolbenstange 2 abhängige Zeit die Verbindung des Kanals 3 mit Absaugleitung 36 - dargestellt in Figur 2 - hergestellt. In dieser Zeit erfolgt die Absaugung von überfüllter Flüssigkeit bis zu einem gewünschten, von der Lage der Einfüllmündung 9 abhängigen Füllstand, wobei gleichzeitig ein Nachtropfen verhindert wird. Danach bewegt sich die Kolbenstange in die in Figur 3 dargestellte Stellung, in der auch die Klauen 25 gespreizt sind, so daß der Adapter vom Einfüllstutzen 10 abgenommen werden kann. Dadurch, daß die beiden Gehäuseteile 4 und 5 mit zueinander unterschiedlichen Abständen ein - und feststellbar sind, kann die Größe der Überdeckung der Ringnuten 33 und 34 mit der Ringnut 38 stufenlos eingestellt werden.

Es ist ersichtlich, daß durch entsprechende Bewegungen der Kolbenstange 2 etwa gleichzeitig der Spann- und Füllvorgang bzw. der Entspann- und Absaugvorgang bewirkt werden. Dadurch können diese Vorgänge in optimal kurzer Zeit ablaufen. Der Adapter ist leicht und handlich und in seinem Durchmesser nicht wesentlich größer als der Einfüllstutzen 10. Beim dargestellten Ausführungsbeispiel ist für die Kolbenstange 2 eine Linearbewegung gewählt. Natürlich können die geschliderten Maßnahmen auch durch eine Drehbewegung der Stange 2 erzielt werden. Die Mechanik müßte dann entsprechend abgeändert werden.

0011155

78.035

## ANSPRÜCHE

1. Fülladapter für Flüssigkeiten, an den mindestens eine Flüssigkeitszuführungsleitung und eine Absaugleitung für überfüllte Flüssigkeit angeschlossen ist, dadurch gekennzeichnet, daß eine gegenüber dem Adaptergehäuse (1) axial verschiebbare Stange (2) mit einem axialen Kanal (3) vorgesehen ist, welche mit ihrem einen Ende die in den jeweiligen Einfüllstutzen (10) bis zum gewünschten Füllstand hineinragende Einfüllmündung (9) bildet, und daß durch eine Verschiebung der Stange (2) gleichzeitig eine im Bereich der Einfüllmündung (9) befindliche Spannvorrichtung (24 bis 29) und Mittel zur Steuerung des Füll- bzw. Absaugvorganges betätigbar sind.

2. Fülladapter nach Anspruch 1, dadurch gekennzeichnet, daß die Stange (2) an einem Kolben (14) befestigt ist, der Bestandteil einer pneumatisch oder hydraulich betätigbaren Zylinder-Kolben-Einrichtung ist.

3. Fülladapter nach Anspruch 1 oder 2 dadurch gekennzeichnet, daß die Mittel zur Steuerung des Füll-bzw. Absaugvorganges an dem der Einfüllmündung (9) abgewandten Ende der Stange (2) angeordnet sind.

4. Fülladapter nach Anspruch 3, dadurch gekennzeichnet, daß das der Einfüllmündung (9) abgewandte Ende der Stange (2) in einem Zylinder (32) geführt ist, daß der in der Stange (2) befindliche Kanal (3) im Bereich der Zylinderwand mündet und daß in der Zylinderwand selbst axial hintereinander angeordnete Öffnungen (32,34) vorgesehen sind, die mit der Flüssigkeitszuführungsleitung (35) bzw. der Absaugleitung (36) in Verbindung stehen.

5. Fülladapter nach Anspruch 4, dadurch gekennzeichnet, daß der Kanal (3) in eine in die Stange (2) eingelassene Ringnut (38) mündet.

6. Fülladapter nach Anspruch 4 oder 5, dadurch gekennzeicnet, daß in der Wand des Zylinders (32) axial hintereinander liegenden Ringnuten (33 bzw. 34) eingefräst sind, in die die Flüssigkeitszuführungsleitung (35) bzw. die Absaugleitung (36) münden.

7. Fülladapter nach einem der Ansprüche 2 bis 6, dadurch gekennzeichnet, daß der mit der Stange (2) verbundene Kolben (14) entgegen Federkraft in Richtung Einfüllmündung (9) pneumatisch betätigbar ist.

8. Fülladapter nach einem der vorhergehenden Ansprüche, dadurch gekenn-eichnet, daß der Einf-llmündung (9) ein Mundstück (8) und Abdichtungsmittel (11,12) zugeordnet sind.

9. Fülladapter nach einem der vorhergehenden Ansprüchen, dadurch gekennzeichnet, daß das Gehäuse (1) zweiteilig ausgebildet ist und daß beide Teile mit unterschiedlichem Abstand zueinander miteinander verbindbar sind.

24.01.80 M

0011155

18
35
36
39
32
33
34
38
37
4
1
19
6
7
2
3
17
14
5
16
30
22
20
21
24
28
27
26
25
40
31
11
12
29
10
8
9
FIG. 1
FIG. 2
FIG. 3

0011155

Europäisches Patentamt

# EUROPÄISCHER RECHERCHENBERICHT

Nummer der Anmeldung
EP 79 10 4072

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | US - A - 3 757 836 (MASUDA)<br>* Spalte 2, Zeilen 38-50; Figuren * | 1 |
| | -- | |
| A | US - A - 3 753 453 (MADDEN)<br>* Zusammenfassung; Figuren * | 1 |
| | -- | |
| A | FR - A - 2 109 843 (THE BENDIX CORP.)<br>* Anspruch 1; Figuren * | 1 |
| | ---- | |

KLASSIFIKATION DER ANMELDUNG (Int.Cl. 3)

F 16 L 37/28
B 60 T 17/22
B 67 D 5/06

RECHERCHIERTE SACHGEBIETE (Int. Cl. 3)

F 16 L
B 60
F 01 P
B 67 D
F 17 C

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 13-02-1980 | HUBEAU |